Europäisches Patentamt

European Patent Office

Office européen des brevets

(19)

(11) Numéro de publication : **0 463 927 B1**

(12) **FASCICULE DE BREVET EUROPEEN**

(45) Date de publication du fascicule du brevet :
**13.04.94 Bulletin 94/15**

(51) Int. Cl.$^5$ : **B01J 20/14**

(21) Numéro de dépôt : **91401626.6**

(22) Date de dépôt : **18.06.91**

(54) **Procédé pour l'obtention d'agents filtrants diatomitiques calcinés très perméables exempts de cristobalite, et agents filtrants ainsi obtenus.**

(30) Priorité : **20.06.90 FR 9007690**

(43) Date de publication de la demande :
**02.01.92 Bulletin 92/01**

(45) Mention de la délivrance du brevet :
**13.04.94 Bulletin 94/15**

(84) Etats contractants désignés :
**DE DK ES FR GB IT**

(56) Documents cités :
**EP-A- 0 068 853**
**US-A- 1 717 661**
**US-A- 1 756 906**
**US-A- 1 813 916**

(73) Titulaire : **CECA S.A.**
**4 - 8, Cours Michelet La Défense 10**
**F-92800 Puteaux (FR)**

(72) Inventeur : **Dufour, Pascal**
**290, avenue d'Argenteuil**
**F-92600 Asnieres/Seine (FR)**

(74) Mandataire : **Haicour, Philippe et al**
**ELF ATOCHEM S.A., D.P.I. 4-8, Cours Michelet**
**La Défense 10 - Cédex 42**
**F-92091 Paris La Défense (FR)**

EP 0 463 927 B1

## Description

La présente invention se rapporte à un nouveau procédé d'obtention d'agents filtrants par calcination de diatomite dans un four à lit transporté grâce auquel on contrôle l'agglomération des particules diatomitiques et la teneur en cristobalite du produit fini.

Les diatomites sont des roches sédimentaires qui résultent de l'accumulation au cours des temps géologiques, et notamment de l'ère tertiaire et de l'ère quaternaire, de restes fossilisés de diatomées. Les diatomées sont des algues unicellulaires qui se sont développées, et se développent encore de nos jours, dans les lacs, les rivières ou les mers. Leurs enveloppes protectrices comportent une ossature siliceuse dont la forme est très variable, rappelant celle de rosaces, de peignes, de napperons, de manchons, etc..., mais toujours garnie d'alvéoles et de canaux d'une très grande finesse. Les diatomites sont ainsi des roches siliceuses de très faible densité et de surface spécifique variant de 1 à 40 m²/g , caractéristiques très particulières, dont on a trouvé depuis longtemps de nombreuses applications industrielles, notamment comme agents de filtration, comme charges fines pour peinture, comme supports de catalyseurs, etc...

Les diatomites constituent un minerai que l'on extrait de leurs gisements naturels et qu'il faut transformer en produits industriels. Le minerai subit divers traitements préliminaires, concassage, séchage, broyage, élimination des impuretés grossières (basalte, argiles, sable,etc... ). Il subit alors l'important traitement de calcination dont le but est de diminuer l'humidité de soixante à environ un pour cent, de brûler les matières organiques qu'il contient, et de transformer en oxydes, silicates ou silicoaluminates certains composés minéraux indésirables qui accompagnent ordinairement la silice, tels que le carbonate de calcium, le sulfate de calcium, des dérivés du fer, et éventuellement des sulfures.

Quand il s'agit de la production d'agents filtrants , une attention toute particulière doit être apportée à la perméabilité qui est une caractéristique évidemment essentielle de ce type de produits. On mesure communément cette perméabilité en darcys, le darcy étant la perméabilité d'un lit poreux de 1 cm de haut et 1 cm² de section à travers lequel s'écoule un fluide dont la viscosité est de 1 mPa.s (ou 1 centipoise) avec un débit de 1 cm³/seconde sous une différence de pression appliquée de 1 atmosphère; un darcy vaut 0,987 $10^{-12}$ m², soit à peu près 1 pm². Les agents filtrants industriels, encore dénommés adjuvants de filtration, ont des perméabilités généralement comprises entre 20 millidarcys et 15 darcys, notablement plus élevées que celles des diatomites qui en sont la matière première. La calcination des diatomites en vue de la production d'agents filtrants a donc aussi pour but d'agglomérer les diatomées et leurs débris de quelques micromètres de longueur en agrégats de 10 µm ou plus, afin d'en diminuer le taux de firmes, et d'en augmenter la perméabilité. Il s'agit évidemment d'une agglomération partielle, qu'il convient de maîtriser de façon à éviter la fusion complète des squelettes diatomitiques et la formation d'agrégats de taille supérieure à 50 µm qui ont le grave inconvénient de décanter ou de déposer dans les points bas des canalisations ou des filtres au cours des opérations de filtration. Il convient également d'éviter qu'au cours de cette phase de traitement n'intervienne une cristallisation de la silice amorphe qui est le constituant essentiel de la diatomite: le problème technique à résoudre est ainsi de produire des agents filtrants par une opération de calcination de diatomite qui détruise ses impuretés naturelles, développe une perméabilité correcte dans les diatomées calcinées tout en maintenant à un niveau très bas leur taux de cristallinité (cristobalite, quartz ou tridymite) .

On a effectivement repéré, (Kadey, 1975 - Deer, 1966) que si les terres diatomitiques contenaient, selon les gisements moins de 1 % de cristobalite, leur calcination provoquait l'apparition de cristobalite, et à un degré moindre de tridymite par conversion thermique de la silice amorphe qui constitue l'essentiel du squelette des diatomées. Le taux de cristobalite dans les produits obtenus par calcination simple varie de 1 à 100 % selon la matière première et la température; il atteint 40 à 80% dans les agents filtrants dits blancs, issus de la calcination en présence de fondants, comme le carbonate de soude. Or l'inhalation de poussières de silice cristalline a été reconnue comme pouvant provoquer l'apparition d'une maladie pulmonaire grave, la silicose. Une monographie de l'International Agency for Research on Cancer (IARC) - Evaluation of carcinogenic risks of chemicals to human, Silica and some silicates, volume 42, 1987 - a même mis en cause la silice cristalline comme agent carcinogène potentiel. Cette opinion est fortement contestée, mais quoi qu'il en soit et bien que la réglementation très complexe qui régit les conditions de travail du personnel exposé aux risques d'inhalations de poussières de silices cristallines soit strictement appliquée, limiter la teneur en silice cristalline des agents filtrants diatomitiques livrés à l'industrie agro-alimentaire reste l'une des préoccupations importante des fabricants. Dans les produits obtenus selon l'art antérieur, la teneur finale en cristobalite est comprise entre 1 et 100% .

En effet, dans ces procédés classiques de fabrication d'agents filtrants, une température de calcination comprise entre 900 et 1200°C est indispensable pour provoquer l'agglomération nécessaire à l'obtention d'une gamme d'agents filtrants à perméabilité comprise entre 20 millidarcys et 15 darcys. Or avec des matières premières riches en fer, sodium et calcium, les fusions superficielles favorisent évidemment l'agglomération désirée, mais elles amorcent aussi la cristallisation rapide de la silice en cristobalite. En dessous de 850°C, cette cristallisation reste faible, mais au-dessus de 900°C, elle augmente très rapidement. On estime que le taux critique des impuretés catalysant cette transformation cristalline est de l'ordre de 1 % .

Dans les procédés classiques anciens de calcination où les temps de séjour à haute température sont nécessairement supérieurs à quelques secondes, voire quelques minutes, on n'évite pas la formation massive de cristobalite. Il est vrai que l'on s'était surtout préoccupé alors des propriétés physiques des produits finis. Antérieurement, on a procédé au traitement thermique des diatomées en les disposant sur des plateaux horizontaux sur lesquels elles étaient calcinées. Le déplacement du produit était assuré des plateaux supérieurs vers les plateaux inférieurs par des bras racleurs en fonte réfractaire. La faible productivité de ce système et son coût d'entretien élevé ont conduit les industriels à préférer les fours de calcination rotatifs. Ces fours rotatifs sont généralement de grande longueur (30 mètres et plus), et fonctionnent à des températures comprises entre 1000 à 1200°C (voir par exemple Diatomaceous Earth, William Q. Hull, dans Industrial and Engineering Chemistry, feb. 1953, pp. 256-269). Il faut en contrôler la marche avec le plus de précision possible si l'on veut éviter la densification de la silice et la destruction de sa structure arachnéenne à laquelle sont attachées ses propriétés industrielles.

Les fabricants dominent bien cette technologie de calcination en four tournant. Néanmoins, il s'agit d'une calcination en masse et en présence d'une flamme dont la transmission de chaleur est extrêmement irrégulière, d'où il résulte que toutes les diatomées n'ont pas reçu le même traitement thermique. Si l'on veut que le traitement thermique s'opère dans toute la masse à une température minimum fixée et pendant une durée suffisante pour que se réalise l'agglomération désirée, il faut accepter qu'une partie de cette masse ait subi une surcalcination superficielle.. Cette fusion superficielle est d'ailleurs souhaitable pour réussir l'agglomération, mais doit être maîtrisée pour limiter autant que faire se peut la destruction de la structure fine de la diatomée et la cristallisation de sa silice. Sinon, ces diatomées endommagées devenues particules dures de silice trop agglomérées doivent être broyées, ce qui augmente défavorablement la "densité gâteau" du produit final. Cette "densité gâteau" est une caractéristique importante des agents filtrants : c'est la densité apparente sèche du lit d'agent filtrant qui reste sur un filtre Büchner après la filtration d'un liquide dans lequel ledit agent filtrant a été préalablement mis en suspension. On estime qu'une "densité gâteau" supérieure à 0,45 g/cm³ correspond à des produits trop fondus ou trop broyés et qui ont perdu la structure poreuse caractéristique requise pour les agents filtrants de bonne qualité. Le broyage accroît le taux de fines dont la trop grande légèreté sera une source de colmatage des filtres et une cause de turbidité indésirable des liquides filtrés. Ce taux de fines doit être diminué par des post-traitements difficiles et coûteux.

Pour une matière première donnée, les caractéristiques finales du calciné, notamment sa perméabilité et taux de refus à 50 μm, sont fortement influencées par le choix de la température de calcination, et par le temps de séjour des diatomées dans le four. La présence d'un refus à 50 μm qui est de règle dans les produits issus des procédés de calcination selon l'art antérieur oblige le fabricant à émotter et à broyer ces produits en sortie du four. C'est une assez lourde contrainte industrielle. Mais de plus, le broyage présente l'inconvénient de manquer de sélectivité : s'il réduit les dimensions des gros agglomérats, il réduit aussi celles des diatomées indépendantes, d'où il résulte une augmentation indésirable du taux de fines et de la "densité gâteau" des produits finis. Les procédés traditionnels de calcination en fours rotatifs ou les procédés anciens de calcination, notamment les fours droits à plateaux superposés ou les fours dits à lit fluide, qui sont des techniques de calcination où le temps de séjour minimum est de l'ordre de quelques minutes, ne permettent pas de maîtriser cette agglomération, et délivrent des produits calcinés dont le refus au tamis de 50μm est toujours supérieur à 5% dès que la température de calcination dépasse 950°C.

Des procédés plus perfectionnés, tels ceux qui sont décrits dans le brevet français N° 2 586 588 ou le brevet d'Allemagne de l'Est DD 266 034, ont fait appel à des fours à lits tourbillonnants, dont la géométrie est telle que les gaz chauds y entraînent la diatomite en veines spiralantes. Dans ce système, on contrôle bien mieux le temps de séjour global de la diatomite dans la veine gazeuse, mais on n'y maîtrise ni l'histoire thermique des particules diatomitiques, ni par voie de conséquence leur agglomération, si bien qu'en pratique on reste très soumis à une granulométrie de la diatomite à traiter qui n'est pas forcément celle que l'on veut obtenir.

On a maintenant trouvé que l'on évitait tous ces inconvénients et que l'on pouvait atteindre aux qualités souhaitées pour les agents filtrants diatomitiques en procédant à une calcination de la diatomite dans une veine gazeuse à haute température, en lui imposant un séjour à très haute température sur une durée courte, dont l'ordre de grandeur est (voir les exemples) de quelques millisecondes, et qu'au cours de cette période l'exposition était suffisante pour que se produise une agglomération satisfaisante sans que s'amorce réellement la cristallisation de la silice, le prolongement du séjour du solide dans la veine gazeuse à une température retombée en dessous d'environ 850°C permettant de parfaire l'élimination des impuretés organiques et soufrées et l'insolubilisation des impuretés métalliques sans que se modifient sensiblement sa perméabilité et sa cristallinité.

La présente invention a donc pour objet un procédé pour l'obtention d'agents filtrants diatomitiques calcinés - on précise ici qu'on entend par agents filtrants diatomitiques calcinés des produits obtenus par calcination simple, c'est-à-dire sans fondants, que l'homme du métier dénomme souvent agents filtrants "roses", parce que la teinte dominante de ces produits est effectivement rose, bien qu'on rencontre parfois des produits saumon ou même blancs; ils s'opposent à ce que l'on dénomme agents filtrants "blancs" ou "activés", qui sont obtenus en présence de fondants, carbonate de sodium en particulier, en dont la structure fine est profondément altérée - par calcination rapide de diatomites, agents filtrants dont la teneur en cristobalite est inférieure à 1% , et dont le refus au tamis de 50 μm inférieur à 5 % est atteint sans broyage après calcination, caractérisé en ce que l'on injecte la diatomite dans une veine gazeuse à haute température, et que durant son séjour dans la veine gazeuse, son temps d'exposition entre environ 1250°C et environ 850°C est limité à une durée de quelques millisecondes.

Dans une forme préférée de l'invention, on crée dans un four cylindrique à axe vertical une veine gazeuse emportée dans un mouvement hélicoïdal, générée par l'injection de gaz chaud à travers des fentes munies d'ailettes inclinées pratiquées dans la sole du four. Le four a été préalablement chargé de billes réfractaires, et le gaz chaud animé d'une grande vitesse leur communique une composante de vitesse verticale qui équilibre leur poids (sustentation) et une composante transversale (mouvement horizontal du lit). Dans ces conditions, les billes réfractaires restent confinées dans un tore qu'elles parcourent d'un mouvement hélicoïdal. Les particules diatomitiques injectées dans la veine gazeuse, de préférence en dessous du tore en sustentation, séjournent un instant dans ce lit permanent de billes incandescentes en sustentation avec lesquelles elles se mettent en équilibre thermique, et où elles entrent en collisions mutuelles dans les espaces libres laissés par les billes : ainsi se réalise le processus de leur calcination et de leur agglomération rapides. Puis elles s'échappent du lit de billes en suivant le mouvement hélicoïdal de la veine gazeuse, parcours de quelques secondes durant lequel se parachève leur calcination à des températures élevées mais néanmoins inférieures à 850°C. Entraînées par le flux gazeux, elles sortent rapidement du four et sont extraites par cyclonage et filtration.

On estime que selon les conditions de réalisation, le temps de séjour des particules diatomitiques dans la veine gazeuse à haute température est de l'ordre de grandeur de quelques millisecondes. Quant aux billes de silice en sustentation, elles continuent de tourner dans un mouvement de rotation d'ensemble qui limite considérablement leur propre abrasion. Ces billes sont de préférence en silice poreuse ou en alumine, et leur diamètre est choisi entre un et quelques millimètres.

Le procédé selon la présente invention a pour avantage de délivrer un agent filtrant calciné dont le refus au tamis de 50 μm est voisin de celui de la matière d'alimentation, c'est-à-dire inférieur à 5 % , pour des valeurs de perméabilité comprises entre 20 millidarcys et 15 darcys. Une conséquence découlant du premier avantage est la suppression de l'étape de broyage, délicate mais nécessaire dans les procédés classiques de calcination. La teneur des agents filtrants obtenus selon le procédé s'établit en dessous de 1 % . Avec certaines roches diatomitiques dont le taux d'impuretés chimiques est suffisamment bas, le taux de cristobalite, quartz ou tridymite peut même être nul. Les exemples qui suivent feront mieux comprendre l'invention.

## EXEMPLES

Dans ces exemples, la perméabilité a été mesurée selon la méthode exposée dans le brevet français FR 2 367 282.

Le refus à 50 μm est mesuré en plaçant 10 g de poudre sur un tamis de 50 μm selon la norme DIN 4188, et en la lavant à l'eau ordinaire jusqu'à ce qu'il passe une eau claire exempte d'agent filtrant. Le produit restant sur le filtre est lavé, séché, pesé et le poids relevé est rapporté à 100 g de poudre.

La perte au feu (PAF) est la perte de poids d'un échantillon calciné à 900°C pendant 1 heure.

La cristobalite est dosée à partir de son diagramme de diffraction X.

La taille des particules est un diamètre moyen équivalent en masse.

Le fer EBC est la quantité de fer extractible par une solution de phtalate acide de potassium selon la norme internationale Analytica EBC - 9.5 fer soluble, D 97 (F 97). Voir aussi Analytica EBC - 7.8 dosage du fer dans la bière, D 66 (F 66).

Exemple 1

L'appareil utilisé ici est un four spécial développé par Torftech Limited, puis Davy Mc Kee. Ce n'est pas à proprement parler un système en lit fluidisé ou transporté, mais un système à lit de substance particulaire sous forme d'une bande turbulente compacte. Le système est décrit dans le brevet européen EP 0068853. Il est constitué d'une enceinte de révolution à axe vertical de 40 cm de diamètre, dans lequel un gaz de combustion ou tout simplement de l'air chauffé à 1200°C est injecté au travers de fentes et de lamelles en céramiques réfractaires inclinées de telle façon que son mouvement dans le four soit hélicoïdal. Le four est équipé de deux cyclones en série et d'un filtre.

Le débit gazeux était de 400 m³/h TPN et la vitesse des gaz au niveau des lamelles en céramiques réfractaires de 50 m.s⁻¹. Le temps de séjour du matériau diatomitique dans la veine gazeuse à haute température est estimé à quelques millisecondes.

Préalablement à sa mise en route, le four est chargé de 500 grammes de billes de silice réfractaire de 2 mm de diamètre. Quand les mouvements de la veine gazeuse et du lit de billes réfractaires en sustentation ont atteint leur état de régime, on introduit les diatomées de façon continue et à raison de 25 kg/heure entre le niveau du lit de billes en sustentation et le niveau d'implantation des lamelles en céramiques réfractaires, l'alimentation à ce niveau étant facilitée par la dépression interne qui règne à cet endroit.

La matière première utilisée est un kieselguhr dont les caractéristiques mesurées après épuration sont les suivantes :

```
Perméabilité                        ß =  0,020 darcy
Densité du gâteau de filtration    Dg ≤  0,4 g/cm3
Refus au tamis de 50              µmR₅₀ =  O %
Perte au feu                       PAF =  9 %
Odeur                                    Néant
Surface BET azote                   Σ =  35 m²/g
Couleur                                  blanche ou verte
Taux de cristobalite                   <  0,25 %
```

Analyse chimique avant perte au feu.

$SiO_2$ = 84,5 %
$Al_2O_3$ = 3,1 %
$Fe_2O_3$ = 2,4 %
CaO = 0,95 %
$Na_2O$ = 0,08 %
MgO = 0,08 %
$K_2O$ = 0,03 %
Carbone = 1,93 %
Soufre organique = 0,8 %
Soufre total = 1,2 %

On a recueilli sous les cyclones un produit calciné que l'on n'a pas soumis au broyage après calcination (c'est une caractéristique des produits selon l'invention); ses caractéristiques sont les suivantes :

| | | | |
|---|---|---|---|
| Perméabilité | ß | = | 0,15 darcy |
| Densité du gâteau de filtration | Dg | = | 0,360 g/cm3 |
| Refus au tamis de 50 $\mu$m | $R_{50}$ | = | O % |
| Taille moyenne des particules | | | 15 $\mu$m |
| Perte au feu | PAF | = | 1 % |
| Odeur | | | Néant |
| Surface BET azote | $\Sigma$ | = | 11 $m^2$/g |
| Couleur | | | rose |
| Carbone + soufre organique | | = | O % |
| Fer (EBC) | | = | 0,013 % |
| Taux de cristobalite | | $\leq$ | 1 % |

Avec la même température, mais dans les conditions de calcination classique en four rotatif industriel, on obtient un produit qui a dû être rebroyé pour présenter les caractéristiques, typiques, qui sont les suivantes :

| | | | |
|---|---|---|---|
| Perméabilité | ß | = | 0,165 darcy |
| Densité du gâteau de filtration | Dg | = | 0,350 g/cm3 |
| Refus au tamis de 50 $\mu$m | | $R_{50}$ = | 7 % |
| Taille moyenne des particules | | | 20 $\mu$m |
| Perte au feu | PAF | = | 0,5 % |
| Odeur | | | Néant |
| Surface BET azote | $\Sigma$ | = | 4 $m^2$/g |
| Couleur | | | rose |
| Carbone + soufre organique | | = | O % |
| Fer (EBC) | | = | 0,0145 % |
| Taux de cristobalite | | $\approx$ | 50 % |

Le produit tel que récupéré au cyclone n'aurait pas été utilisable comme agent filtrant sans un rebroyage. Il présente malgré tout un refus important à 50 μm.

Exemple 2 :

Avec la même matière première et le même appareillage que dans l'exemple 1, mais en opérant à une température de calcination inférieure (1060°C), on recueille un produit qui n'exige pas de rebroyage après calcination, et dont les caractéristiques sont les suivantes :

```
Perméabilité                        ß =   0,112 darcy
Densité du gâteau de filtration   Dg =   0,365 g/cm3
Refus au tamis de 50 µm          R50 =   0 %
Taille moyenne des particules            18 µm
Perte au feu                     PAF =   2,8 %
Odeur                                    Néant
Surface BET azote                  =   29 m2/g
Couleur                                  rose
Carbone + soufre organique         =   0 %
Fer (EBC)                          =   0,015 %
Taux de cristobalite               <   0,25 %
```

La perte au feu élevée 2,7%, représente l'eau de constitution des argiles dont la présence n'est pas nuisible à la qualité de l'agent filtrant. La totalité des matières carbonées et soufrées d'origine organique a été éliminée.

En four industriel classique à la même température de 1060°C, le produit que l'on obtient a dû être rebroyé pour présenter les caractéristiques suivantes :

```
Perméabilité                        ß =   0,065 darcy
Densité du gâteau de filtration   Dg =   0,335 g/cm3
Refus au tamis de 50 µm          R50 =   3 %
Taille moyenne des particules            20 µm
Perte au feu                     PAF =   0,5 %
Odeur                                    Néant
Surface BET azote                  Σ =   6 m2/g
Couleur                                  rose
Carbone + soufre organique         =   0 %
Fer (EBC)                          =   0,0135 %
Taux de cristobalite               ≈   5 %
```

Exemple 3 :

Les condition de l'essai ici relaté sont les mêmes que celles de l'exemple numéro 1, avec toutefois une modification importante : on n'a pas ajouté de billes de silice dans le four. Le temps de résidence des diatomées dans la zone de chauffe, compte tenu de la vitesse du flux gazeux, est estimé à 2 millisecondes.
Les caractéristiques du produit obtenu sont les suivantes :

7

```
Perméabilité                           ß =   0,029 darcy
Densité du gâteau de filtration       Dg =   0,335 g/cm3
Refus au tamis de 50 µm              R₅₀ =   3 %
Taille moyenne des particules                20 µm
Perte au feu                         PAF =   7 %
Odeur                                         Néant
Surface BET azote                      Σ =   35 m²/g
Couleur                                       blanche
Carbone                                  =   1,6%
Soufre organique                         =   0,7 %
Fer (EBC)                                =   0,0135 %
Taux de cristobalite                     <   1 %
```

Cet exemple démontre l'intérêt du lit de billes pour atteindre le niveau d'agglomération nécessaire au développement d'une bonne perméabilité. A remarquer que le système utilisé ici est celui que l'on propose pour l'expansion de la rhyolite en perlite (la perlite est également utilisée comme agent filtrant) ou du mica en vermiculite expansée. La présence des billes n'y est pas nécessaire à cause de la grosseur des grains supérieure à 160 µm et de la densité importante de ces matériaux. L'entraînement de la perlite ou de la vermiculite ainsi formées est alors largement facilité par la différence de densité avant et après calcination, et les billes de silice, si elles avaient été utilisées, n'auraient joué aucun rôle de régulation du temps de séjour, celui-ci ayant été assuré par la masse importante des grains de rhyolite ou de mica en équilibre avec le flux gazeux.

Exemple 4 :

Cet exemple illustre la difficulté qu'on rencontre pour activer des diatomées dans les fours tubulaires verticaux habituellement utilisés pour l'expansion de la perlite. L'installation utilisée dans cet exemple est constituée d'un brûleur surmonté d'un tube cylindrique et d'un cyclone de captation. Dans le tube cylindrique, et au niveau de la flamme, une entrée latérale est aménagée pour permettre l'introduction des diatomées. La température des gaz d'échappement est de 900°C, mais dans la flamme elle atteint 1700°C.

On a utilisé la même diatomite que dans l'exemple 1. Après passage dans la flamme, on récupère un produit dont les caractéristiques sont devenues :

```
Perméabilité                           ß =   0,051 darcy
Densité du gâteau de filtration       Dg =   0,257 g/cm3
Refus au tamis de 50 µm              R₅₀ =   8 %
Taille moyenne des particules                22 µm
Perte au feu                         PAF =   3 %
Odeur                                         Néant
Surface BET azote                      Σ =   35 m²/g
Couleur                                       grise
Carbone                                  =   1,6%
Soufre organique                         =   0,7 %
Fer (EBC)                                =   0,0135 %
Taux de cristobalite                     <   0,1 %
```

Les diatomées n'ont pas été assez calcinées pour être acceptables comme agent filtrant, leur envolement trop rapide ayant empêché la destruction totale des matières organiques. La teinte grise, et non pas rose du produit indique une calcination également insuffisante des matières organiques ou un dépôt de carbone. Le produit obtenu est un mélange de diatomées calcinées et non calcinées à cause des gradients de température et du déplacement non homogène des diatomées dans le tube.

Exemple 5 :

On décrit ci-après le résultat d'une calcination de diatomées en lit fluide. Cette technique ne doit pas être considérée comme une technique de calcination flash. Le four en lit fluide utilisé ici est un four à l'échelle pilote, constitué d'un tube en acier réfractaire de 3 mètres de hauteur et de 0,105 m de diamètre. Le distributeur de gaz chaud à la base du lit fluide est constitué de billes en acier inoxydable de 3 mm de diamètre. Au-dessus de ce distributeur, la hauteur du lit de diatomées est d'environ 10 cm. Les diatomées alimentent le four à raison de 0,6 kg/heure et séjournent en moyenne 4 minutes dans le lit fluide. La vitesse de déplacement vertical des diatomées agglomérées est estimée à 0,2 m/s. On récupère 5 % du produit sous forme d'envolements dans le cyclone; les 95 % restants sont récollés au déversoir.
Les caractéristiques du produit calciné à 1000°C sont :

| | | |
|---|---|---|
| Perméabilité | $\beta$ = | 0,097 darcy |
| Densité du gâteau de filtration | Dg = | 0,230 g/cm$^3$ |
| Refus au tamis de 50 $\mu$m | $R_{50}$ = | 19 % |
| Perte au feu à 900 C 1 heure | PAF = | 0,5 % |
| Carbone + soufre organique | = | 0 % |
| Couleur | | rose |
| Taux de cristobalite | $\approx$ | 12 % |
| Taille moyenne des particules | | 18 $\mu$m |

Le chiffre de 19% de refus au tamis de 50 $\mu$m montre combien est difficile une agglomération contrôlée dans de telles conditions. En revanche la teneur en cristobalite est normalement élevée, compte tenu de la matière première utilisée et de son temps de séjour important dans la zone de chauffe.

On aura remarqué dans ces exemples la possibilité d'obtenir une catégorie très particulière d'agents filtrants diatomitiques calcinés, celle des agents filtrants très perméables, de perméabilité comprise entre environ 0,06 et 0,4 darcy, et dont le taux de cristobalite est inférieur à 1%, catégorie jusqu'à présent inconnue car la calcination à basse température qui préserve la silice amorphe, et qui ne s'applique qu'à certaines diatomites relativement pures, n'est pas de nature à augmenter leur perméabilité naturelle.

**Revendications**

1. Procédé pour l'obtention d'agents filtrants diatomitiques calcinés à teneur en cristobalite inférieure à 1 % , avec un refus au tamis de 50 $\mu$m obtenu sans rebroyage, inférieur à 5 % , par calcination rapide de diatomite dans une veine veine gazeuse à haute température, caractérisé en ce que durant son séjour dans la veine gazeuse ladite diatomite reste maintenue entre environ 1250°C et 850°C pendant une durée de quelques millisecondes, le prolongement du séjour du solide dans la veine gazeuse à une température retombée en dessous d'environ 850°C permettant de parfaire l'élimination des impuretés organiques et soufrées et l'insolubilisation des impuretés métalliques sans que se modifie sensiblement sa perméabilité et sa cristallinité.

2. Procédé pour l'obtention d'agents filtrants diatomitiques calcinés selon la revendication 1, caractérisé en ce que l'on injecte la diatomite dans une veine gazeuse à haute température, et que cette veine gazeuse véhicule un matériau tiers en sustentation.

3. Procédé pour l'obtention d'agents filtrants diatomitiques selon la revendication 2, caractérisé en ce qu'on opère dans un four dans lequel d'une part la veine gazeuse a un parcours ascendant hélicoïdal et où d'autre part le matériau tiers n'est pas entraîné par le gaz mais reste maintenu en sustentation dans une zone annulaire.

4. Procédé pour l'obtention d'agents filtrants diatomitiques selon la revendication 3, caractérisé en ce que l'introduction des diatomées est effectuée en dessous de l'anneau de matériau tiers en sustentation.

5. Procédé pour l'obtention d'agents filtrants diatomitiques selon la revendication 4, caractérisé en ce que le temps de séjour des diatomées dans la partie de la veine gazeuse véhiculant un matériau tiers en sustentation est de l'ordre de quelques millisecondes.

6. Procédé pour l'obtention d'agents filtrants diatomitiques selon les revendications 2 à 5, caractérisé en ce que le matériau tiers est constitué de billes réfractaires.

7. Procédé pour l'obtention d'agents filtrants diatomitiques selon les revendications 1 à 6, caractérisé en ce que l'on utilise des diatomites titrant plus de 0,05 % d'impuretés chimiques prises dans le groupe constitué par sels ou oxydes de métaux alcalins ou alcalino-terreux, d'aluminium, de fer.

8. Procédé pour l'obtention d'agents filtrants diatomitiques selon l'une quelconque des revendications 1 à 7, caractérisé en ce que le gaz est de l'air ou des gaz de combustion contenant de l'oxygène.

9. Agents filtrants diatomitiques calcinés, avec un refus au tamis de 50 μm inférieur à 5 %, dont la perméabilité est comprise entre 0,06 et 0,4 darcy et dont la teneur en cristobalite est inférieure à 1 % .

## Patentansprüche

1. Verfahren zur Herstellung von gesinterten, kieselgurhaltigen Filtrationsmitteln eines Cristobalitgehalts unter 1 %, mit einem ohne weiteres Mahlen erhaltenen Rückstand auf einem 50 μm-Sieb unter 5 %, durch schnelles Sintern von Kieselgur in einem Gasstrom bei hoher Temperatur, dadurch gekennzeichnet, daß die Kieselgur während ihres Aufenthalts im Luftstrom für die Dauer von einigen Millisekunden auf einer Temperatur zwischen 1250 und 850°C gehalten wird, wobei ein längerer Aufenthalt des Feststoffes im Gasstrom bei einer unter etwa 850°C zurückgefallenen Temperatur die Entfernung von organischen und schwefelhaltigen Verunreinigungen und die Unlöslichkeit von metallischen Verunreinigungen bewirkt, ohne daß sich Permeabilität und Kristallinität der Kieselgur wesentlich verändern.

2. Verfahren zur Herstellung von gesinterten, kieselgurhaltigen Filtrationsmitteln nach Anspruch 1, dadurch gekennzeichnet, daß man die Kieselgur in einen Gasstrom hoher Temperatur einbläst, und daß dieser Luftstrom einen dritten Stoff im Schwebezustand trägt.

3. Verfahren zur Herstellung von gesinterten, kieselgurhaltigen Filtrationsmitteln nach Anspruch 2, dadurch gekennzeichnet, daß es in einem Ofen durchgeführt wird, in dem einerseits der Gasstrom in einer aufsteigenden spiralförmigen Bahn verläuft und andererseits der dritte Stoff nicht vom Gas mitgerissen, sondern in einer ringörmigen Zone im Schwebezustand gehalten wird.

4. Verfahren zur Herstellung von kieselgurhaltigen Filtrationsmitteln nach Anspruch 3, dadurch gekennzeichnet, daß die Einbringung der Kieselgur unterhalb des Rings des dritten Stoffes im Schwebezustand erfolgt.

5. Verfahren zur Herstellung von kieselgurhaltigen Filtrationsmitteln nach Anspruch 4, dadurch gekennzeichnet, daß die Verweildauer der Kieselgur in dem Teil des Luftstroms, der einen dritten Stoff im Schwebezustand trägt, in der Größenordnung einiger Millisekunden liegt.

6. Verfahren zur Herstellung von kieselgurhaltigen Filtrationsmitteln nach den Ansprüchen 2 bis 5, dadurch gekennzeichnet, daß der dritte Stoff aus feuerfesten Kugeln besteht.

7. Verfahren zur Herstellung von kieselgurhaltigen Filtrationsmitteln nach den Ansprüchen 1 bis 6, dadurch gekennzeichnet, daß man Kieselgur verwendet, welche mehr als 0,05 % an chemischen Verunreinigungen aus der Gruppe von Salzen oder Oxiden der Alkali- oder Erdalkalimetalle, des Aluminiums oder Eisens enthalten.

8. Verfahren zur Herstellung von kieselgurhaltigen Filtrationsmitteln nach einem der Ansprüche 1 bis 7, dadurch gekennzeichnet, daß das Gas Luft oder Sauerstoff enthaltendes Verbrennungsgas ist.

9. Gesinterte, kieselgurhaltige Filtrationsmittel, mit einem Rückstand im 50 μm-Sieb unter 5 %, deren Permeabilität zwischen 0,06 und 0,4 Darcy liegt und deren Cristobalitgehalt kleiner als 1 % ist.

**Claims**

1. Process for obtaining calcined diatomaceous filtering agents having a cristobalite content of less than 1 %, with a 50 μm screen oversize obtained without regrinding of less than 5 %, by rapid calcination of diatomite in a gaseous stream at high temperature, characterized in that, during its holding time in the gaseous stream, the said diatomite remains kept between approximately 1250°C and 850°C for a duration of a few milliseconds, the extension of the holding time of the solid in the gaseous stream at a temperature which has fallen below approximately 850°C allowing completion of the removal of organic and sulphur-containing impurities and insolubilization of the metallic impurities, without its permeability and its crystallinity being substantially altered.

2. Process for obtaining calcined diatomaceous filtering agents according to Claim 1, characterized in that the diatomite is injected into a gaseous stream at high temperature, and in that this gaseous stream carries a third supported material.

3. Process for obtaining diatomaceous filtering agents according to Claim 2, characterized in that this is carried out in a furnace in which, on the one hand, the gaseous stream has a helicoid upwards path and, on the other hand, the third material is not entrained by the gas but remains held supported in an annular region.

4. Process for obtaining diatomaceous filtering agents according to Claim 3, characterized in that the diatoms are introduced below the ring of supported third material.

5. Process for obtaining diatomaceous filtering agents according to Claim 4, characterized in that holding time of the diatoms in the part of the gaseous stream conveying a supported third material is of the order of a few milliseconds.

6. Process for obtaining diatomaceous filtering agents according to Claims 2 to 5, characterized in that the third material consists of refractory balls.

7. Process for obtaining diatomaceous filtering agents according to Claims 1 to 6, characterized in that use is made of diatomites measuring more than 0.05 % of chemical impurities taken from the group consisting of salts or oxides of alkaline or alkaline-earth metals, of aluminium, of iron.

8. Process for obtaining diatomaceous filtering agents according to any one of Claims 1 to 7, characterized in that the gas is air or combustion gases containing oxygen.

9. Calcined diatomaceous filtering agents with a 50 μm screen oversize of less than 5 % whose permeability lies between 0.06 and 0.4 darcy and whose cristobalite content is less than 1 %.